Europäisches Patentamt

European Patent Office

Office européen des brevets

(11) Veröffentlichungsnummer: **0 228 526**

**A2**

# (12) EUROPÄISCHE PATENTANMELDUNG

(21) Anmeldenummer: 86115052.2

(22) Anmeldetag: 29.10.86

(51) Int. Cl.⁴: **G11B 5/633** , G11B 5/84

(30) Priorität: 27.12.85 DE 3546163
16.01.86 DE 3601146

(43) Veröffentlichungstag der Anmeldung:
15.07.87 Patentblatt 87/29

(84) Benannte Vertragsstaaten:
FR GB IT

(71) Anmelder: Gelmuplast Peter Mundt GmbH &
Co KG
Partenkirchner Str. 50
D-8105 Farchant(DE)

(72) Erfinder: Giraud, Jean-Pierre
Montmogis Commune de St. Rémy de la
Vanne
F-77320 La Ferté-Gaucher(FR)

(74) Vertreter: Lorenz, Eduard et al
Rechtsanwälte Eduard Lorenz - Bernhard
Seidler Margrit Seidler - Dipl.-Ing. Hans-K.
Gossel Dr. Ina Philipps - Dr. Paul B.
Schäuble Dr. Siegfried Jackermeier
Dipl.-Ing. Armin Zinnecker
Widenmayerstrasse 23 D-8000 München
22(DE)

(54) Verfahren und Vorrichtung zum Aufbringen eines Magnetstreifens auf ein Filmrähmchen.

(57) Die Erfindung bezieht sich auf ein Verfahren zum Aufbringen eines Magnetstreifens auf ein Filmrähmchen. Zu dem Zweck, das Verfahren zu einfachen und zu beschleunigen, wird auf die Filmrähmchen eine magnetisierbare Schicht aufgedruckt, die sich auf dem Umfang einer rotierenden Druckwalze befindet.

EP 0 228 526 A2

## Verfahren und Vorrichtung zum Aufbringen eines Magnetstreifens auf ein Filmrähmchen

Die Erfindung betrifft ein Verfahren zum Aufbringen eines Magnetstreifens auf ein Filmrähmchen, insbesondere auf ein Diapositivrähmchen, und eine Vorrichtung zur Durchführung dieses Verfahrens.

Bei einem vorbekannten Verfahren dieser Art wird zunächst auf ein Filmrähmchen ein Klebstoff aufgebracht. Anschliessend wird ein Magnetstreifen auf den Klebstoff aufgelegt. Bei einem weiteren vorbekannten Verfahren wird ein mit einer Klebeschicht versehener Magnetstreifen auf ein Filmrähmchen aufgelegt und verklebt. Den vorbekannten Verfahren ist es gemeinsam, daß eine Zwischenschicht aus Klebstoff zwischen dem Filmrähmchen und dem Magnetstreifen erforderlich ist. Dies bedingt ein kompliziertes Herstellungsverfahren. Die vorbekannten Verfahren sind auch teuer, da auf den Klebstoff nicht verzichtet werden kann.

Es ist weiterhin bekannt, mit Hilfe des Siebdruck-Verfahrens einen Magnetstreifen auf ein Filmrähmchen aufzubringen. Das Siebdruck-Verfahren ist jedoch aufwendig und langsam.

Magnetstreifen können schließlich noch im Heißsiegel-Verfahren auf eine flächige Unterlage aufgebracht werden. Dieses Verfahren wird beispielsweise bei den bekannten Euroscheck-Karten angewendet. Es ist jedoch ebenfalls aufwendig und langsam.

Aufgabe der Erfindung ist es daher, ein Verfahren zum Aufbringen eines Magnetstreifens auf ein Filmrähmchen zu schaffen, welches ohne eine Zwischenschicht aus Klebstoff zwischen dem Filmrähmchen und der magnetisierbaren Schicht auskommt, und welches einfach und schnell durchführbar ist.

Erfindungsgemäß wird diese Aufgabe dadurch gelöst, daß eine magnetisierbare Masse, die sich auf dem Umfang einer rotierenden Druckwalze befindet, auf die Filmrähmchen aufgedruckt wird. Die magnetisierbare Masse ist dabei zunächst flüssig und enthält eine hinreichende Menge magnetisierbarer Teilchen. Sie wird anschliessend ohne Zwischenschicht aus Klebstoff unmittelbar mittels einer rotierenden Gravurwalze auf die Filmrähmchen aufgedruckt. Dieses Verfahren ist schnell, einfach und kostengünstig.

In vorteilhafter Weiterbildung der Erfindung wird die magnetisierbare Masse aus einem Vorratsbehälter von einer sich drehenden Gravurwalze an deren Umfang aufgenommen und von dort auf eine Druckwalze übertragen. Die Druckwalze kann vorzugsweise aus elastischem Material (beispielsweise Silikon) ausgeführt werden, um Unebenheiten auf der Oberfläche der Filmrähmchen auszugleichen. Die genannten Maßnahmen ermöglichen eine besonders einfache Durchführung des Verfahrens.

Eine Vorrichtung zur Durchführung des erfindungsgemäßen Verfahrens besteht aus einem Vorratsbehälter für die magnetisierbare Masse, einer rotierenden Gravurwalze und einer Fördereinrichtung für die zu bedruckenden Filmrähmchen. Eine vorteilhafte Weiterbildung der erfindungsgemäßen Vorrichtung weist eine Gravurwalze auf, die die magnetisierbare Masse aus dem Vorratsbehälter aufnimmt und an eine Druckwalze überträgt. An der Gravurwalze ist ein Abstreifer vorgesehen, damit die Menge der von der Gavurwalze aufzunehmenden magnetisierbaren Masse nur in den Vertiefungen der Gravurwalze liegt.

Ein Ausführungsbeispiel einer Vorrichtung zur Durchführung des erfindungsgemäßen Verfahrens wird anhand der Zeichnung näher erläutert. In dieser zeigen

Fig. 1 eine Seitenansicht einer Vorrichtung zur Durchführung des erfindungsgemäßen Verfahrens und

Fig. 2 eine Ansicht von oben der in Fig. 1 dargestelllten Vorrichtung.

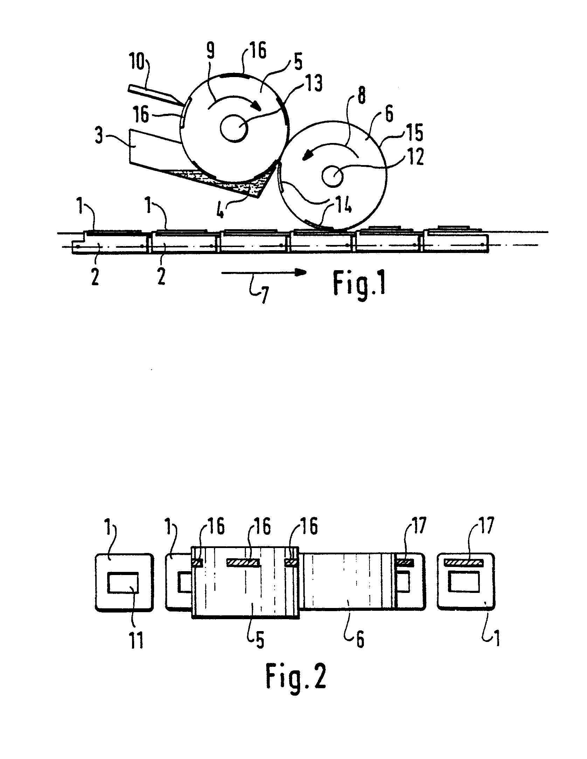

Wie aus Fig. 1 ersichtlich ist, weist die Vorrichtung eine Gravurwalze 5, die auf einer Drehachse 13 drehbar gelagert ist und eine auf einer Drehachse 12 drehbar gelagerte Druckwalze 6 auf. Die Gravurwalze 5 taucht teilweise in die flüssige magnetisierbare Masse 4 ein, die sich in dem Vorratsbehälter 3 befindet. Die Filmrähmchen 1 befinden sich auf Förderelementen 2. Jedem Förderelement 2 ist dabei ein einziges Filmrähmchen 1 zugeordnet.

Beim Betrieb der Vorrichtung bewegen sich die Förderelemente 2 mit den auf deren Oberseite aufliegenden Filmrähmchen 1 in Richtung des Pfeils 7. Die Druckwalze 6 dreht sich gegen die Richtung des Uhrzeigersinns (Pfeilrichtung 8). Die Drehgeschwindigkeit der Druckwalze 6 ist dabei so gewählt, daß die Geschwindigkeit des Umfangs 15 der Druckwalze 6 genauso groß ist wie die Längsgeschwindigkeit der Filmrähmchen 1. Die Gravurwalze 5 dreht sich in Richtung des Uhrzeigersinns (Pfeilrichtung 9). Die Geschwindigkeit des Umfangs der Gravurwalze 5 ist genauso groß wie die Geschwindigkeit des Umfangs 15 der Druckwalze 6.

Beim Eintauchen in die magnetisierbare Masse 4 nimmt die Gravurwalze 5 in ihren Vertiefungen 16 magnetisierbare Masse auf. Die überschüssige Menge der magnetisierbaren Masse wird mittels des Abstreifers 10 von der Gravurwalzeze 5 abgestreift. Durch den Abstreifer 10 wird also sichergestellt, daß sich die magnetisierbare Masse am Umfang der Gravurwalze 5 lediglich in den Vertiefungen 16 befindet und nicht in dem zwischen diesen Vertiefungen 16 liegenden Umfangsabschnitten.

Vom Umfang der Gravurwalze 5 wird die in den Feldern 16 befindliche magnetisierbare Masse auf den Umfang 15 der Druckwalze 6 übertragen. Sie befindet sich auf dem Umfang 15 der Druckwalze 6 in den Feldern 14.

Anschliessend wird die in den Feldern 14 des Umfangs 15 der Druckwalze 6 befindliche magnetisierbare Masse auf die Filmrähmchen 1 aufgedruckt.

In Fig. 2 erkennt man die Felder 16 am Umfang der Gravurwalze 5. Nach erfolgtem Druckvorgang befindet sich die magnetisierbare Masse in den Feldern 17 auf den Filmrähmchen 1, die jeweils eine Fensteröffnung 11 aufweisen.

## Ansprüche

1. Verfahren zum Aufbringen eines Magnetstreifens auf ein Filmrähmchen, dadurch gekennzeichnet, daß eine magnetisierbare Masse (4, 16, 14, 17), die sich auf dem Umfang (14, 15) einer rotierenden Druckwalze (6) befindet, auf die Filmrähmchen (1) aufgedruckt wird.

2. Verfahren nach Anspruch 1, dadurch gekennzeichnet, daß die magnetisierbare Masse (4) aus einem Vorratsbehälter (3) von einer sich drehenden Gravurwalze (5) an deren Umfang (16) aufgenommen wird, von wo sie auf die Druckwalze - (6) übertragen wird.

3. Vorrichtung zu Durchführung des Verfahrens nach Anspruch 1 oder 2, gekennzeichnet durch einen Vorratsbehälter (3) für die magnetisierbare Masse (4), eine rotierende Druckwalze (6) und eine Fördereinrichtung (2) für die zu bedruckenden Filmrähmchen (1).

4. Vorrichtung nach Anspruch 3, dadurch gekennzeichnet, daß eine Gravurwalze (5) vorgesehen ist, die die magnetisierbare Masse (4) aus dem Vorratsbehälter (3) aufnimmt und an die Druckwalze (6) überträgt.

5. Vorrichtung nach Anspruch 4, dadurch gekennzeichnet, daß ein Abstreifer (10) an der Gravurwalze (5) vorgesehen ist.

Fig.1

Fig.2